# EUROPEAN PATENT APPLICATION

(11) **EP 1 033 822 A2**
(43) Date of publication of application: **06.09.2000**
(21) Application number: 00108094.4
(22) Date of filing: 15.01.1997
(51) Int. Cl.: H04B 1/38, H01Q 1/24

(54) **Antenna system for dual mode satellite/cellular portable phone**

(30) Priority: 16.01.1996 US 586433
(62) Divisional of application: 97903857.7
(71) Applicant: ERICSSON INC., Research Triangle Park, NC 27709 (US)
(72) Inventor: Hassan, Amer, Cary, NC 27513 (US); Reinhold, Stanley L., Cary, NC 27511 (US); Hayes, Gerard James, Wake Forest, NC 27587 (US); MacDonald, James D., Jr., Apex, NC 27502 (US); Ma, Yawei, Raleigh, NC 27607 (US)
(74) Representative: O'Connell, David Christopher

(57) **Abstract**

A portable phone capable of operating in cellular and satellite modes of communication is disclosed as including a main housing, circuitry located within the main housing for operating the portable phone in the cellular mode, circuitry located within the main housing for operating the portable phone in the satellite mode, a first antenna coupled to the cellular circuitry for receiving and transmitting signals in the cellular mode, and a second antenna coupled to the satellite circuitry for receiving and transmitting signals in the satellite mode. The second antenna can either be mounted to the main housing of the portable phone or housed within a flip cover coupled to the main housing. If provided, the flip cover is coupled to the main housing so as to be rotatable about a first axis and a second axis substantially perpendicular thereto. The first antenna may extend from the main housing, be printed on a surface of the flip cover, or be housed within the flip cover adjacent the second antenna.

## Description

### BACKGROUND OF THE INVENTION

### 1. Field of the Invention

The present invention relates to a dual mode satellite/cellular portable phone and, more particularly, to an antenna system for a dual mode satellite/cellular portable phone.

### 2. Description of Related Art

Portable cellular phones are well known and have been utilized for the last several years. Such cellular phones typically transmit and receive signals at a frequency of approximately 900 Megahertz by means of an antenna designed for such purpose. Recently, however, it has become important for a second mode of communication, i.e., satellite, to be employed in areas where cellular towers or stations are not available. Satellite communication occurs at frequencies much higher than for cellular communication (i.e., 1.0-30.0 Gigahertz), and therefore requires an antenna designed for such purpose.

It is recognized that separate antennas are necessary for cellular and satellite modes of communication since cellular antennas are linearly polarized and satellite antennas are circularly polarized. A further difference is that the satellite communication mode involves a directional component, where link margin is increased when the satellite antenna is pointed toward the satellite, and the cellular communication mode does not. Thus, the positioning of the satellite antenna in the portable phone is very important, as is the construction of the satellite antenna.

Flip covers for portable phones have generally been used to protect the keypad or display and has only extended over part of the phone base. In certain applications, though, a flip cover has been utilized to house an antenna (e.g., U.S. Patent 5,337,061, U.S. Patent 5,258,892, U.S. Patent 5,014,346, and U.S. Patent 5,170,173). As will be seen herein, each of the antennas disclosed in these patents is of a different construction than the satellite antenna of the present invention. Additionally, the mechanical coupling of the flip cover to the main housing in such patents involves rotation about a single axis between an open and a closed position.

In light of the foregoing, a primary object of the present invention is to provide a portable phone which is able to operate in the dual modes of satellite and cellular communication.

Another object of the present invention is to provide an antenna system for a portable phone which is able to operate in the dual modes of satellite and cellular communication.

A further object of the present invention is to provide an antenna system for a portable phone operable in a satellite communication mode which has an improved gain/temperature ratio for better link margin.

Yet another object of the present invention is to provide a flip cover for housing the satellite antenna of a portable phone, where the flip cover is uniquely coupled to the main housing to enable better orientation of the satellite antenna with respect to the applicable satellite.

These objects and other features of the present invention will become more readily apparent upon reference to the following description when taken in conjunction with the following drawing.

### SUMMARY OF THE INVENTION

In accordance with one aspect of the present invention, a portable phone capable of operating in cellular and satellite modes of communication is disclosed. The dual mode portable phone includes a main housing, circuitry located within the main housing for operating the portable phone in the cellular mode, circuitry located within the main housing for operating the portable phone in the satellite mode, a first antenna coupled to the cellular circuitry for receiving and transmitting signals in the cellular mode, and a second antenna coupled to the satellite circuitry for receiving and transmitting signals in the satellite mode. The second antenna can either be mounted to the main housing of the portable phone or housed within a flip cover coupled to the main housing. If provided, the flip cover is coupled to the main housing so as to be rotatable about a first axis and a second axis substantially perpendicular thereto. The first antenna may extend from the main housing, be printed on a surface of the flip cover, or be housed within the flip cover adjacent the second antenna.

In a second aspect of the present invention, a portable phone operable in a satellite mode of communication is disclosed as including a main housing, circuitry located within the main housing for operating the portable phone in the satellite mode, a flip cover rotatably secured to the main housing about a first axis and a second axis substantially perpendicular thereto, and an antenna coupled to the satellite circuitry for receiving and transmitting signals in the satellite mode located within the flip cover.

In a third aspect of the present invention, an antenna system for a portable phone having circuitry operable in cellular and satellite modes is disclosed as including a first antenna coupled to the circuitry for transmitting and receiving signals within a first frequency bandwidth for cellular mode communication and a second antenna coupled to the circuitry for transmitting and receiving signals within a second frequency bandwidth for satellite mode communication.

### BRIEF DESCRIPTION OF THE DRAWING

While the specification concludes with claims particularly pointing out and distinctly claiming the present invention, it is believed the same will be better understood from the following description taken in conjunction with the accompanying drawing in which:
Fig. 1 is a perspective view of the dual mode portable phone of the present invention, where the flip cover is in a closed position;
Fig. 2 is a perspective view of the dual mode portable phone of Fig. 1, where the flip cover has been rotated partially open about a first axis;
Fig. 3 is a perspective view of the dual mode portable phone of Fig. 2, where the flip cover has been rotated partially sideways about a second axis;
Fig. 4 is a perspective view of the dual mode portable phone of Fig. 3, where the flip cover has been fully rotated about the first and second axes into the desired open position;
Fig. 5 is a front interior view of the flip cover for the dual mode portable phone depicted in Figs. 1-4;
Fig. 5A is a side view of the flip cover depicted in Fig. 5;
Fig. 6 is an exploded, partial perspective view of the dual mode portable phone of Figs. 1-4, including the hinge mechanism and universal joint used to couple the flip cover to the main housing;
Fig. 7 is a circuit diagram depicting the interface of the satellite antenna with the circuitry located within the main housing;
Fig. 8 is a side diagrammatic view of a dual mode portable phone having an alternative antenna configuration;
Fig. 9 is a rear diagrammatic view of the dual mode portable phone of Fig. 8; and
Fig. 10 is a cross-sectional view of the satellite antenna depicted in Fig. 9.

### DETAILED DESCRIPTION OF THE INVENTION

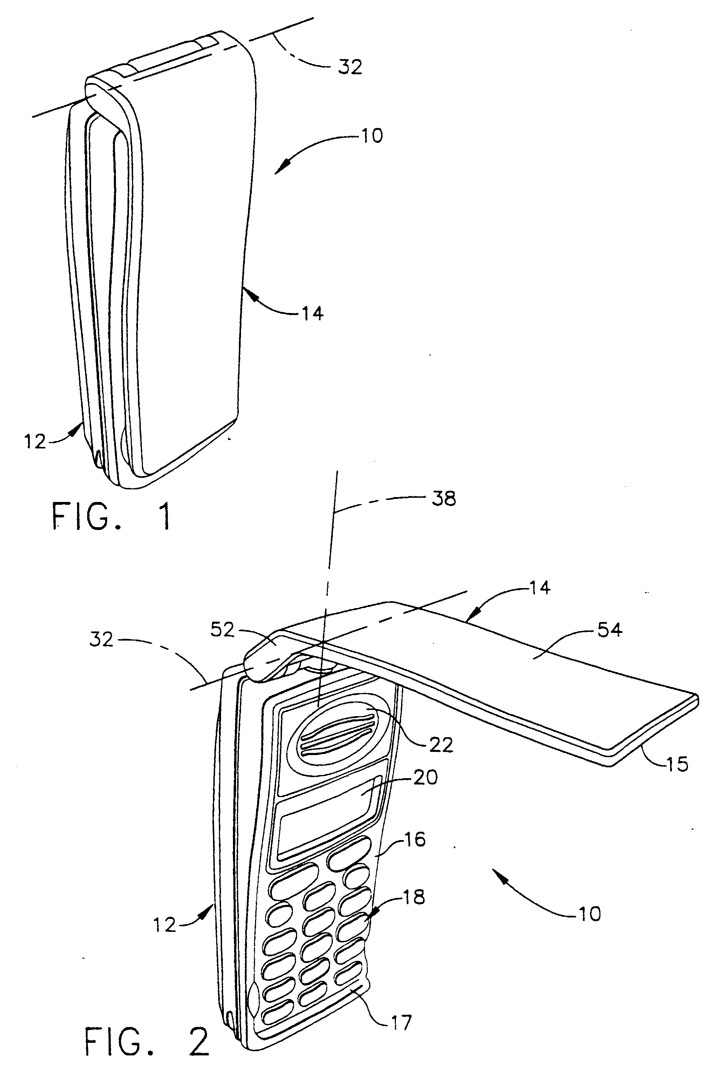

Referring now to the drawing in detail, wherein identical numerals indicate the same elements throughout the figures, Figs. 1-4 depict a handheld portable phone capable of operating in the dual modes of cellular and satellite communication and is indicated generally by the numeral 10. It will be seen that portable phone 10 includes a main housing 12 and preferably a flip cover 14 rotatably secured to main housing 12. Flip cover 14 is shown as being in the closed position in Fig. 1, where a distal end 15 thereof engages a receiving ledge 17 on a top surface 16 of main housing 12 so as to lie over substantially all of top surface 16. It will be noted from Figs. 2-4 that top surface 16 of main housing 12 offers access to a keypad 18, a display 20, and a speaker 22. Also, while not shown, it will be understood that main housing 12 includes circuitry therein enabling portable phone 10 to communicate in both the cellular and satellite modes of communication, such as that shown and described in a patent application entitled "Dual Mode Satellite/Cellular Terminal," Serial No. / , , which is owned by the assignee of the present invention and is hereby incorporated by reference.

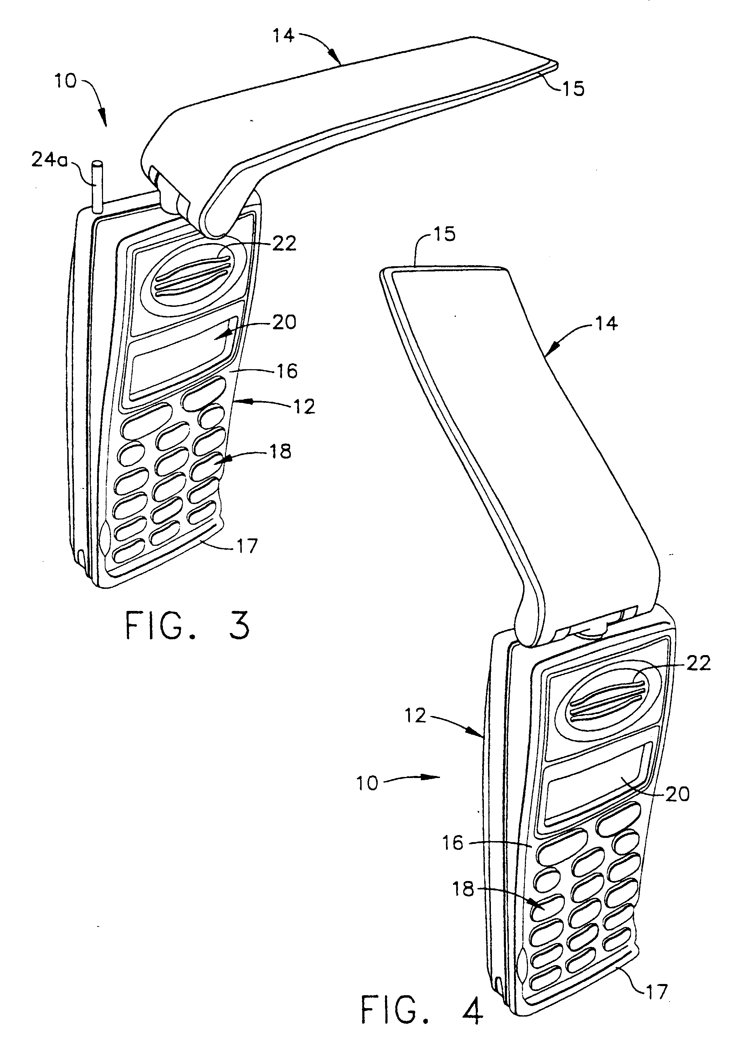

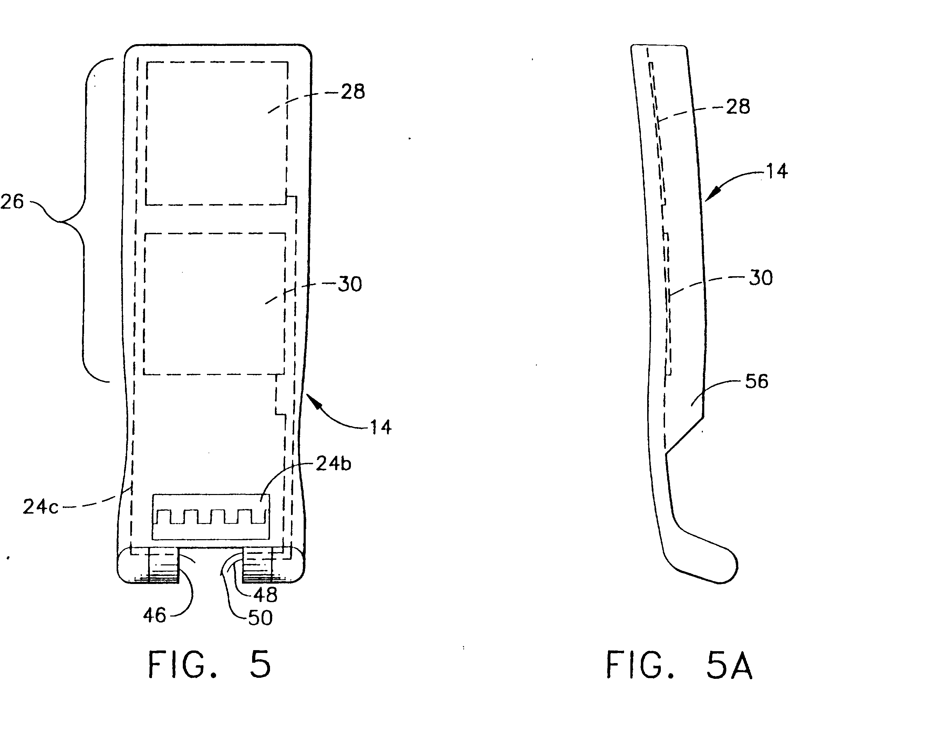

Portable phone 10 further includes a first antenna 24 coupled to the cellular circuitry in main housing 12 for receiving and transmitting signals in the cellular mode and a second antenna 26 coupled to the satellite circuitry in main housing 12 for receiving and transmitting signals in the satellite mode. Also included is interfacing circuitry for such second antenna 26, designated generally by the numeral 25, which is described in greater detail hereinafter. It is preferred that second antenna 26 (which is circularly polarized) be positioned within flip cover 14, whereas first antenna 24 (which is linearly polarized) is preferably a monopole type antenna which may extend from main housing 12 (see 24a in Fig. 3), be printed on an interior surface 19 of flip cover 14 (see 24b in Fig. 5), or be located within flip cover 14 adjacent second antenna 26 (see 24c in Fig. 5). In any event, it is recognized that due to the differences in polarization, separate antennas are required in order to make the most efficient use of energy radiated therefrom.

As seen in Fig. 5, second antenna 26 is preferably comprised of a first patch antenna element 28 for transmitting signals to a satellite and a second patch antenna element 30 for receiving signals from a satellite, although a single patch antenna element (as seen with an alternate embodiment herein) may be utilized to perform both functions. The construction of flip cover 14 and the mounting of first and second patch antenna elements 28 and 30 is described in greater detail in a patent application filed concurrently herewith entitled "Flip Cover and Antenna Assembly for a Portable Phone," which is also owned by the assignee of the present invention and is hereby incorporated by reference. In order to minimize interference, first and second patch antenna elements 28 and 30 are tuned to separate frequency bandwidths of operation, depending on those available. Accordingly, it is preferred that first patch antenna element 28 transmit signals to a satellite within a first frequency bandwidth (e.g., approximately 1.626 to approximately 1.661 Gigahertz) and second patch antenna element 30 receive signals from a satellite within a second frequency bandwidth (e.g., approximately 1.525 to approximately 1.560 Gigahertz). It will be noted that each of the frequency bandwidths of operation for first and second patch antenna elements 28 and 30 are approximately .035 Gigahertz and are much higher than the normal operational frequency for the cellular mode of communication, which is approximately 900 Megahertz.

Since the satellite mode of communication involves a directional component, whereby link margin between portable phone 10 and an applicable satellite is improved when second antenna 26 is positioned in alignment therewith, an important aspect of the present invention is to provide a configuration in which second antenna 26 may be maneuvered into position without undue effort. Additionally, because the radiation to the user is to be minimized and the ratio of gain to temperature is directly related to link margin, it would be advantageous for second antenna 26 to be located away from the user of portable phone 10. By positioning first and second patch antenna elements 28 and 30 within flip cover 14, with transmitting patch antenna element 28 being located near flip cover distal end 15, each of these objectives are met.

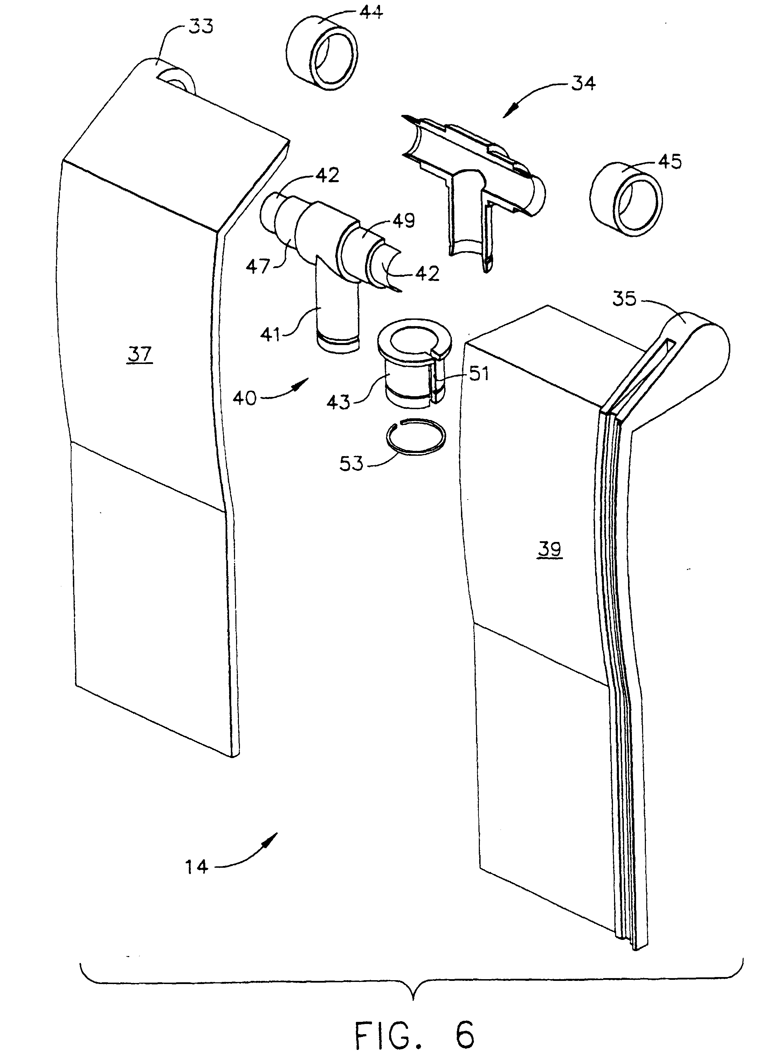

With respect to the coupling of flip cover 14 and main housing 12, it will be understood from Figs. 1 and 2 that flip cover 14 is rotatable about a first axis 32 between a closed position (i.e., at a 0° position) to a maximum open position as seen in Fig. 4 (i.e., at a 180° position). A hinge mechanism 34 is provided in order for flip cover 14 to be rotatable about first axis 32 (which is oriented longitudinally through hinge mechanism 34), and as best seen in Fig. 6 hinge mechanism 34 is preferably retained within first and second bearing caps 33 and 35 of flip cover end 36. It will be noted that first bearing cap 33 is associated with a first or outer flip cover housing 37 and second bearing cap 35 is associated with a second or inner flip cover housing 39 so that they are in alignment when first and second flip cover housings 37 and 39 are mated together. A shaft 42 is retained within first and second bearing caps 33 and 35 (which may include O rings at a stepped-down surface thereof), with first and second retainer rings 44 and 45 being provided on corresponding raised surfaces 47 and 49 positioned on shaft 42. A stop (not shown) may be provided in order to prevent the over-rotation of flip cover 14 about first axis 32.

Flip cover 14 is also rotatable about a second axis 38, which is substantially perpendicular to first axis 32. This is accomplished by means of a universal joint 40 coupled to hinge mechanism 34 (second axis 38 being a centerline through universal joint 40). As seen in Fig. 6, a male portion 41 of universal joint 40 is associated with shaft 42 of hinge mechanism 34 and it is mated with a female portion 43 of universal joint 40 retained in main housing 12. It will be noted that female portion 43 has a longitudinal slot 51 which allows it to expand when male portion 41 is inserted therein. After male portion 41 engages female portion 43 by means of respective detents, a clip ring 53 is positioned around female portion 43 to hold male portion 41 in place. Flip cover 14 is rotatable about second axis 32 in either direction a maximum amount (preferably from 0° to +180° or 0° to -180°), which may be enforced by one or more stops. Of course, to enable male portion 41 to extend through flip cover end 36 for rotation about second axis 38, a slotted portion 46 is included in flip cover 14 at end 36. It will also be noted that a minimum amount of rotation must occur about first axis 32 through hinge mechanism 34 (at least 90°) before flip cover 14 will be able to rotate about second axis 38 through universal joint 40.

In order to couple first and second patch antenna elements 28 and 30 of second antenna 26 with the applicable circuitry contained within main housing 12, shaft 42 and male and female portions 41 and 43 of universal joint 40 preferably are hollow so that a pair of leads 48 and 50 may extend therethrough and traverse hinge mechanism 34. Permitting only the maximum amount of rotation about universal joint 40 is important in this regard in order to limit the bending stresses on leads 48 and 50.

It will also be seen from Figs. 1-4 that flip cover 14 preferably includes a first substantially planar section 52 located adjacent end 36 which couples to main housing 12 and a second substantially planar section 54 oriented at an angle to first section 52. This orientation between first and second sections 52 and 54 permits second section 52 to lie over top surface 16 of main housing 12. Additionally, it will be noted that flip cover 14 may include a flange 56 extending from the perimeter of second flip cover section 54 which wraps around the corresponding edges of main housing 12.

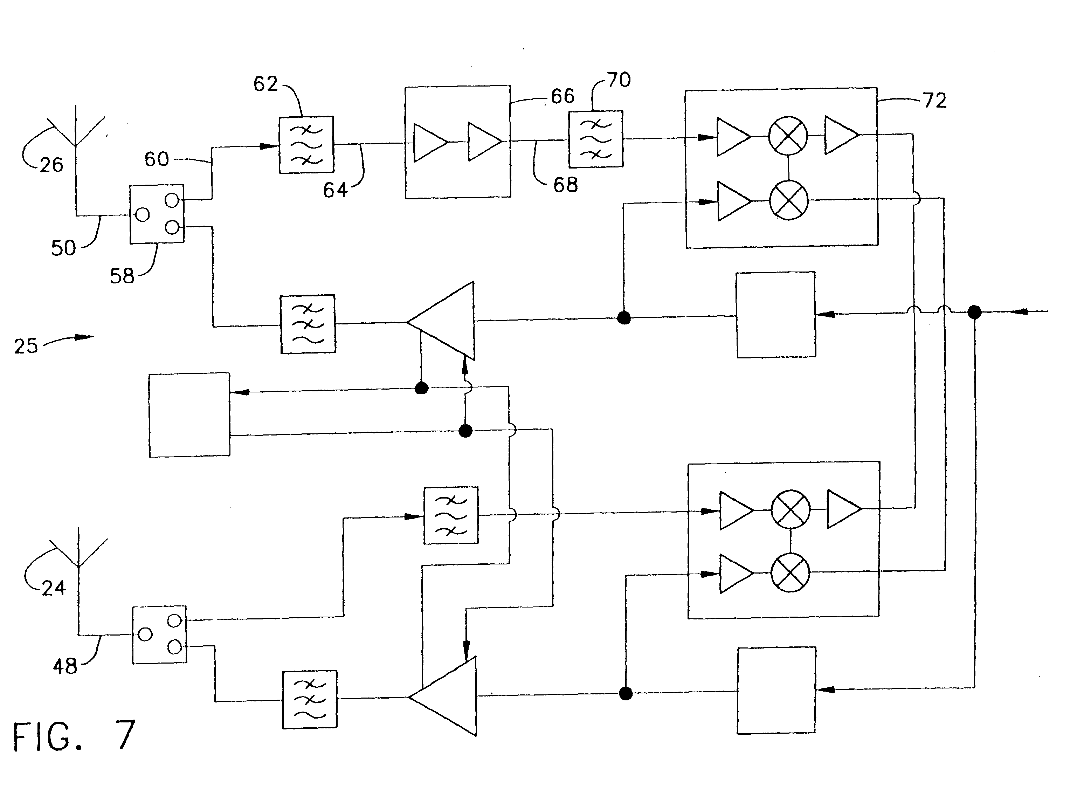

As stated previously herein, first and second antennas 24 and 26 are connected to the operating circuitry within main housing 12 by means of leads 48 and 50, respectively, and interfacing circuitry 25 (see Fig. 7). Most of interfacing circuitry 25 has been utilized previously with respect to previous cellular portable phones sold by the assignee of the present invention, and indeed one goal is to use as much of such circuitry as possible. Thus, only the portion of interfacing circuitry 25 relating to second antenna 26 will be discussed.

It will be seen that a PIN diode type T/R switch 58 receives lead 50 and connects second antenna 26 to the receiver input. A signal 60 is routed through a first receive bandpass filter 62 which provides blocking of out-of-band interference. Preferably, filter 62 is a three-pole dielectric filter to meet the selectivity requirement placed on a system operating at L-band. A low noise amplifier 66 implemented in two stages then provides gain to a signal 64 on the order of 30 dB with a noise figure of approximately I dB. Output 68 from low noise amplifier 66 is routed through an image reject filter 70 to an ASIC 72 which performs heterodyning to the first IF. This is the first common signal point shared with GSM mode circuitry normally utilized within assignee's cellular phones. Of course, it will be understood that the aforementioned description relates to a single patch antenna element and that use of separate patch antenna elements 28 and 30 for transmitting and receiving eliminates the need for T/R switch 58 (and the corresponding insertion loss applicable thereto), although this improvement is subject to losses stemming from additional connectors and circuit lines.

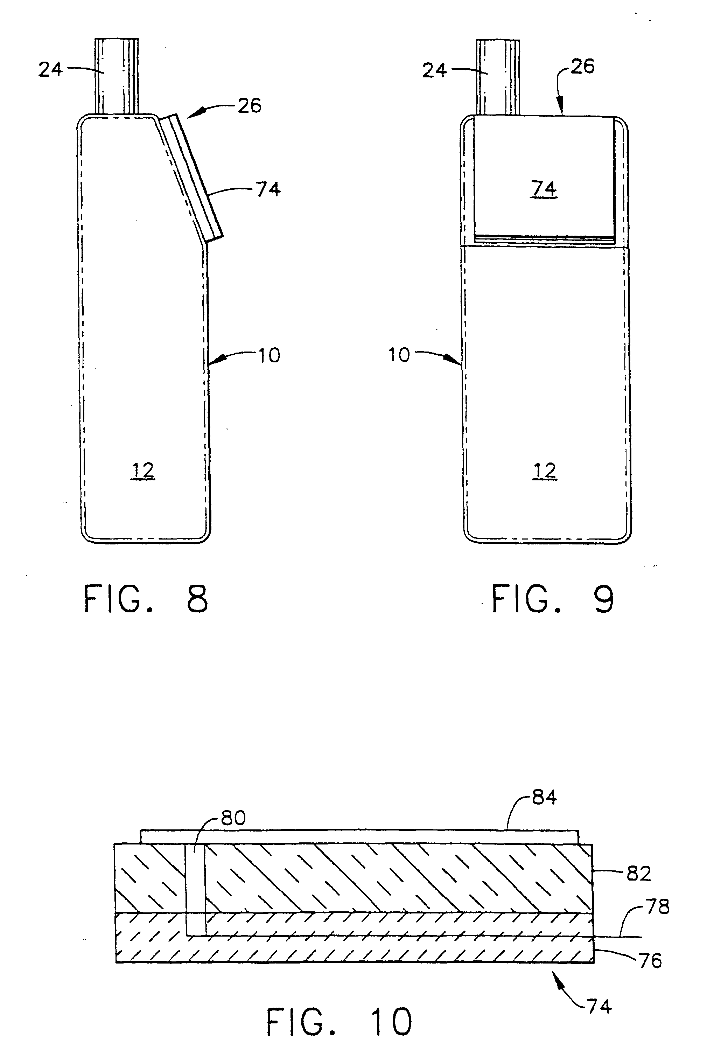

A second embodiment of portable phone 10 involves the application of second antenna 26 directly onto main housing 12 as seen in Figs. 8 and 9. Accordingly, there is no need for a flip cover or the manipulations thereof as described previously herein. While some advantages are gained from this embodiment in a mechanical sense, it has been found that as much as 1 dB of loss occurs with this configuration and it is therefore undesirable from an electrical standpoint.

Nevertheless, it will be seen in Fig. 10 that a single patch antenna element 74 includes a feed substrate 76 positioned adjacent a rear surface of main housing 12, a dielectric substrate 82 positioned over feed substrate 76, and a radiating element 84 positioned over dielectric substrate 82. A feed trace 78 is provided to connect radiating element 84 with the circuitry in main housing 12 at a feed point 80. Such single patch antenna element can then be used to both transmit and receive signals in the satellite mode.

Having shown and described the preferred embodiments of the invention, further adaptations of the dual mode portable phone and the antenna system therefor disclosed herein can be accomplished by one of ordinary skill in the art without departing from the scope of the invention. In particular, it will be understood that the concepts relating to second antenna 26 herein are just as applicable for a portable phone operable in only the single mode of satellite communication. Additionally, flip cover 14 may be mounted to main housing 12 in any manner that would permit rotation about two separate axes. For example, flip cover 14 may be mounted indirectly to main housing 12 by means of a support bracket such as that described in a patent application filed concurrently herewith entitled "A Detachable Flip Cover Antenna Assembly," which is owned by the assignee of the present invention and is hereby incorporated by reference.

## Claims

1. A portable phone (10) capable of operating in a satellite mode of communication, comprising:
(a) a main housing (12) having a top portion, a bottom portion, a front portion, and a rear portion;
(b) circuitry located (25) within said main housing for operating said portable phone in said satellite mode;
said portable radio being characterized by:
(c) a flip cover (14) rotatably secured to said main housing about a first axis (32) and a second axis (38) substantially perpendicular thereto; and
(d) an antenna (26) coupled to said satellite circuitry for receiving and transmitting signals in said satellite mode, said antenna being located within said flip cover.

2. The portable phone of claim 1, wherein said flip cover (14) is rotatably secured to said top portion of said main housing.

3. The portable phone of claim 1, wherein said flip cover (14) is sized to lie adjacent to substantially all of said front portion of said main housing (12) when in a closed position.

4. The portable phone of claim 1, said antenna (26) comprising a single patch antenna element (31) for receiving and transmitting signals.

5. The portable phone of claim 1, said antenna further comprising:
(a) a first patch antenna element (28) for receiving signals from a satellite; and
(b) a second patch antenna element (30) for transmitting signals to a satellite.

6. The portable phone of claim 1, wherein said satellite circuitry (25) operates within a frequency bandwidth of approximately 1.0 to approximately 30.0 Gigahertz.

7. The portable phone of claim 5, wherein said first patch antenna element (28) operates within a frequency bandwidth of approximately 1.525 to approximately 1.560 Gigahertz.

8. The portable phone of claim 5, wherein said second patch antenna element (30) operates within a frequency bandwidth of approximately 1.626 to approximately 1.661 Gigahertz.

9. The portable phone of claim 1, wherein said flip cover (14) is rotatable about said first axis (32) in a range of 0° to approximately 180°.

10. The portable phone of claim 1, wherein said flip cover (14) is rotatable about said second axis (38) in a range of approximately 0° to 180°.

11. The portable phone of claim 1, further comprising a hinge mechanism (34) coupling said flip cover (14) and said main housing (12), said first axis (32) extending longitudinally through said hinge mechanism (34) .

12. The portable phone of claim 11, further comprising a universal joint (40) associated with said hinge mechanism (34), said second axis (38) being positioned as a centerline through said universal joint (40).

13. The portable phone of claim 5, said first patch antenna element (28) being located adjacent a distal end of said flip cover (14).

14. The portable phone of claim 12, said flip cover (14) including a slotted portion (46) adjacent an end coupled to said main housing (12), wherein said slotted-portion (46) is sized to accommodate rotation about said universal joint (40).

15. The portable phone of claim 12, said universal joint (40) being hollow so that means for coupling said second antenna (26) to said satellite transmitting and receiving circuitry is able to traverse said hinge mechanism (34).

16. The portable phone of claim 1, wherein rotation of said flip cover (14) about said second axis (38) cannot occur until said flip cover (14) has been rotated about said first axis (32) a minimum amount.

17. The portable phone of claim 5, wherein said first and second patch antennas (28,30) are positioned adjacent each other in substantially the same plane.

18. The portable phone of claim 1, wherein said flip cover (14) is substantially planar in configuration.

19. The portable phone of claim 1, said flip cover further comprising:
(a) a first section coupled to said main housing (12); and
(b) a substantially planar second section oriented at an angle to said flip cover first section, said flip cover second section lying on top of said main housing when in a closed position.

20. The portable phone of claim 19, said flip cover (14) including a flange (56) extending from the perimeter thereof, wherein said flange (56) wraps around corresponding edges of said main housing.

21. The portable phone of claim 20, said flip cover second section including a flange (56) extending from the perimeter thereof, wherein said flange wraps around corresponding edges of said main housing.

22. A portable phone (10) capable of operating in cellular and satellite modes of communication, comprising:
(a) a main housing (12) having a top portion, a bottom portion, a front portion, and a rear portion;
(b) circuitry (25) located within said main housing for operating said portable phone in said cellular mode;
(c) circuitry (25) located within said main housing for operating said portable phone in said satellite mode;
said portable phone being characterized by:
(d) a first antenna (24) coupled to said cellular circuitry for receiving and transmitting signals in said cellular mode,
(e) a second antenna (26) coupled to said satellite circuitry for receiving and transmitting signals in said satellite mode; and
(f) a flip cover (14) rotatably secured to said top portion of said main housing (12) about a first axis (32) and a second axis (38) substantially perpendicular thereto, wherein said flip cover (14) is sized to lie adjacent to substantially all of said front portion of said main housing (12) when in a closed position, said second antenna (26) being located within said flip cover (14).

23. The portable phone of claim 22, wherein said flip cover is rotatable about said first axis (32) in a range of 0° to about 180°.

24. The portable phone of claim 22, wherein said flip cover is rotatable about said second axis (38) in a range of approximately 0° to approximately 180°.

25. The portable phone of claim 22, further comprising a hinge mechanism (34) coupling said flip cover (14) and said main housing (12), said first axis (32) extending longitudinally through said hinge mechanism (34).

26. The portable phone of claim 25, further comprising a universal joint (40) associated with said hinge mechanism (34), said second axis (38) being positioned as a centerline through said universal joint (40) .

27. The portable phone of claim 26, said flip cover including a slotted portion (46) adjacent an end coupled to said main housing, wherein said slotted portion is sized to accommodate rotation about said universal joint (40).

28. The portable phone of claim 26, said universal joint (40) being hollow so that means for coupling said second antenna to said satellite transmitting and receiving circuitry is able to traverse said hinge mechanism (34).

29. The portable phone of claim 22, wherein rotation of said flip cover (14) about said second axis (38) cannot occur until said flip cover (14) has been rotated about said first axis (32) a minimum amount.

30. The portable phone of claim 22, said first antenna (24) further comprising a monopole antenna extending from said top portion of said main housing (12) .

31. The portable phone of claim 22, said first antenna (24) further comprising a printed circuit antenna located on an interior surface of said flip cover (14).

32. The portable phone of claim 22, said first antenna (24) being located within said flip cover (14).

33. The portable phone of claim 22, said second antenna (26) further comprising a single patch antenna for receiving signals from and transmitting signals to a satellite.

34. The portable phone of claim 22, said second antenna (26) further comprising:
(a) a first patch antenna element (28) for receiving signals from a satellite; and
(b) a second patch antenna element (30) for transmitting signals to a satellite.

35. The portable phone of claim 34, said first patch antenna element (24) being located adjacent a distal end of said flip cover (17).

36. The portable phone of claim 34, wherein said first patch antenna element (28) operates within a frequency bandwidth of approximately 1.525 to approximately 1.560 Gigahertz.

37. The portable phone of claim 34, wherein said second patch antenna element (30) operates within a frequency bandwidth of approximately 1.626 to approximately 1.661 Gigahertz.

38. The portable phone of claim 34, wherein said first and second patch antenna elements (28, 30) are positioned adjacent each other in substantially the same plane.

39. The portable phone of claim 22, wherein said flip cover (14) is substantially planar in configuration.

40. The portable phone of claim 22, said flip cover (14) further comprising:
(a) a first substantially planar section coupled to said main housing; and
(b) a second substantially planar section oriented at an angle to said flip cover first section, said flip cover second section lying on top of said main housing when in a closed position.

41. The portable phone of claim 39, said flip cover including a flange (56) extending from the perimeter thereof, wherein said flange (56) wraps around corresponding edges of said main housing.

42. The portable phone of claim 40, said flip cover second section including a flange (56) extending from the perimeter thereof, wherein said flange wraps around corresponding edges of said main housing.
